# EUROPEAN PATENT APPLICATION

(11) **EP 4 835 968 A1**
(43) Date of publication of application: **04.11.2026**
(21) Application number: 23963019.7
(22) Date of filing: 25.12.2023
(51) Int. Cl.: H01M 4/13, H01M 4/133, H01M 4/583

(54) **NEGATIVE ELECTRODE MATERIAL FOR LITHIUM-ION SECONDARY BATTERY, NEGATIVE ELECTRODE FOR LITHIUM-ION SECONDARY BATTERY, LITHIUM-ION SECONDARY BATTERY, AND METHOD FOR PRODUCING NEGATIVE ELECTRODE MATERIAL FOR LITHIUM-ION SECONDARY BATTERY**

(71) Applicant: Resonac Corporation, Tokyo 105-7325 (JP)
(72) Inventor: ONUMA, Hiroo, Tokyo 105-7325 (JP); HOSHI, Kento, Tokyo 105-7325 (JP); HOMBO, Hidetoshi, Tokyo 105-7325 (JP); UCHIYAMA, Yoshinori, Tokyo 105-7325 (JP)
(74) Representative: Berggren Oy
(86) International application number: PCT/JP2023/046460
(87) International publication number: WO 2025/141658

(57) **Abstract**

Provided is a negative electrode material for a lithium-ion secondary battery, which is graphite particles satisfying the following Formula (1): $0.01 y + 76.19 x \leq 256.75$ (1) in Formula (1), x is an average interplanar spacing (d₀₀₂, unit: Å) of the graphite particles as determined by an X-ray diffraction method, and y is a crystallite size Lc (nm) of the graphite particles.

## Description

### [Technical Field]

The present disclosure relates to a negative electrode material for a lithium-ion secondary battery, a negative electrode for a lithium-ion secondary battery, a lithium-ion secondary battery, and a method for producing a negative electrode material for a lithium-ion secondary battery.

### [Background Art]

Lithium-ion secondary batteries have conventionally been widely used in electronic devices such as notebook personal computers (PCs), mobile phones, smartphones, and tablet PCs, because of their characteristics of compactness, lightness, and high energy density. In recent years, against the backdrop of environmental issues such as global warming caused by CO₂ emissions, clean electric vehicles (EVs) that run only on batteries, hybrid electric vehicles (HEVs) combining a gasoline engine and a battery, and plug-in hybrid electric vehicles (PHEVs) have become widespread, and the development of lithium-ion secondary batteries (vehicle-mounted lithium-ion secondary batteries) to be installed in these vehicles has been in progress.

The input characteristics of a lithium-ion secondary battery are greatly influenced by the performance of a negative electrode material of the lithium-ion secondary battery. As a material for a negative electrode material for a lithium-ion secondary battery, carbon materials have been widely used. For example, as materials for obtaining a high-density negative electrode, highly crystallized carbon materials such as artificial graphite and spherical natural graphite obtained by spheroidizing flake natural graphite have been proposed.

As artificial graphite, for example, PTL 1 discloses a negative electrode material for a lithium-ion secondary battery including composite particles including a plurality of plate-like graphite particles aggregated or bonded so that their orientation planes are non-parallel, and spherical graphite particles.

### [Citation List]

### [Patent Literature]

[PTL 1] WO 2015/147012

### [Summary of Invention]

### [Technical Problem]

Due to the rapid growth of the EV market, the demand for a negative electrode material for a lithium-ion secondary battery has been increasing. In the lithium-ion secondary battery, repetition of charging and discharging causes expansion of the negative electrode, and due to the expansion of the negative electrode, separation of the negative electrode material or the like tends to occur, and deterioration of cycle characteristics or the like also tends to occur.

An object of the present disclosure is to provide a negative electrode material for a lithium-ion secondary battery capable of suppressing expansion of a negative electrode when charging and discharging are repeated, a negative electrode for a lithium-ion secondary battery including the same, and a lithium-ion secondary battery. A further object of the present disclosure is to provide a method for producing a negative electrode material for a lithium-ion secondary battery, which enables the manufacture of a lithium-ion secondary battery in which expansion of a negative electrode can be suppressed when charging and discharging are repeated.

### [Solution to Problem]

Means for solving the above problem include the following aspects.
<1> A negative electrode material for a lithium-ion secondary battery, which is graphite particles satisfying the following Formula (1): $0.01 y + 76.19 x \leq 256.75$ (1) in Formula (1), x is an average interplanar spacing (d₀₀₂, unit: Å) of the graphite particles as determined by an X-ray diffraction method, and y is a crystallite size Lc (nm) of the graphite particles.
<2> The negative electrode material for a lithium-ion secondary battery according to <1>, in which the graphite particles have a compressive load of 2.3 kN/cm² or more, the compressive load being a magnitude of pressure required to compress the graphite particles to a density of 1.7 g/cm³.
<3> The negative electrode material for a lithium-ion secondary battery according to <1> or <2>, in which the graphite particles include artificial graphite particles, the artificial graphite particles are particles obtained by graphitizing a mixture containing a graphitizable aggregate and a graphitizable binder, and the binder contains a polymer compound having water solubility or water absorbency.
<4> The negative electrode material for a lithium-ion secondary battery according to any one of <1> to <3>, in which a circularity of the graphite particles is 90.7% or more.
<5> The negative electrode material for a lithium-ion secondary battery according to any one of <1> to <4>, in which an oil absorption of the graphite particles is 45 mL/100 g or less.
<6> The negative electrode material for a lithium-ion secondary battery according to any one of <1> to <5>, in which a 0-tap density of the graphite particles is 0.65 g/cm³ to 0.80 g/cm³.
<7> The negative electrode material for a lithium-ion secondary battery according to any one of <1> to <6>, in which a 30-tap density of the graphite particles is 0.86 g/cm³ to 1.10 g/cm³.
<8> The negative electrode material for a lithium-ion secondary battery according to any one of <1> to <7>, in which a 250-tap density of the graphite particles is 1.05 g/cm³ to 1.25 g/cm³.
<9> The negative electrode material for a lithium-ion secondary battery according to any one of <1> to <8>, in which a specific surface area of the graphite particles determined by nitrogen adsorption measurement at 77 K is 0.2 m²/g to 6.0 m²/g.
<10> A negative electrode for a lithium-ion secondary battery, including a negative electrode material layer including the negative electrode material for a lithium-ion secondary battery according to any one of <1> to <9>, and a current collector.
<11> A lithium-ion secondary battery, including the negative electrode for a lithium-ion secondary battery according to <10>, a positive electrode, and an electrolyte.
<12> A method for producing a negative electrode material for a lithium-ion secondary battery, the method being a method for producing the negative electrode material for a lithium-ion secondary battery according to any one of <1> to <9>, the method including:
   (a) a step of obtaining a mixture containing a graphitizable aggregate and a graphitizable binder containing a polymer compound having water solubility or water absorbency;
   (b) a step of molding the mixture to obtain a molded body;
   (c) a step of graphitizing the molded body to obtain a graphitized product; and
   (d) a step of pulverizing the graphitized product to obtain a pulverized product.
<13> The method for producing a negative electrode material for a lithium-ion secondary battery according to <12>, further including, prior to the step (a), (e) a step of spheroidizing the graphitizable aggregate.

### [Advantageous Effects of Invention]

The present disclosure can provide a negative electrode material for a lithium-ion secondary battery capable of suppressing expansion of a negative electrode when charging and discharging are repeated, a negative electrode for a lithium-ion secondary battery including the same, and a lithium-ion secondary battery.

The present disclosure can provide a method for producing a negative electrode material for a lithium-ion secondary battery, which enables the manufacture of a lithium-ion secondary battery in which expansion of a negative electrode can be suppressed when charging and discharging are repeated.

### [Description of Embodiments]

Hereinafter, embodiments for carrying out the present invention will be described in detail. However, the present invention is not limited to the following embodiments. In the following embodiments, the constituent elements (including elemental steps and the like) are not essential unless specifically stated otherwise. The same applies to numerical values and ranges thereof, which do not limit the present invention.

In the present disclosure, the term "step" includes, in addition to a step independent from other steps, a step in which, even in a case where it cannot be clearly distinguished from other steps, the purpose of the step is achieved.

In the present disclosure, in a numerical range indicated using "to", the numerical values described before and after "to" are included as the minimum value and the maximum value, respectively.

In the present disclosure, in numerical ranges described stepwise, an upper limit value or a lower limit value described in one numerical range may be replaced with an upper limit value or a lower limit value of another numerical range described in a stepwise manner. In addition, in the numerical ranges described in the present disclosure, an upper limit value or a lower limit value of the numerical range may be replaced with a value indicated in the Examples.

In the present disclosure, each component may include a plurality of types of corresponding substances. When a plurality of types of substances corresponding to the respective components are present in a composition, the content ratio or content of each component means, unless otherwise specified, the total content ratio or content of the plurality of substances present in the composition.

In the present disclosure, particles corresponding to the respective components may include a plurality of types. When a plurality of types of particles corresponding to the respective components are present in a composition, the particle diameter of each component means, unless otherwise specified, a value with respect to a mixture of the plurality of particles present in the composition.

In the present disclosure, the term "layer" or "film" includes, in addition to a case where the layer or film is formed over the entire region when the region in which the layer or film is present is observed, a case where the layer or film is formed only in a part of the region.

In the present disclosure, the term "stacking" refers to stacking of layers, and two or more layers may be bonded, or two or more layers may be detachable.

In the present disclosure, the particle size distribution of the negative electrode material can be measured with a laser diffraction particle size distribution measuring apparatus. The average particle diameter of the particles is a particle diameter (D50) at which the cumulative volume reaches 50% from the small-diameter side in the particle size distribution on a volume basis. D90 is a particle diameter at which the cumulative volume reaches 90% from the small-diameter side in the particle size distribution on a volume basis, and D10 is a particle diameter at which the cumulative volume reaches 10% from the small-diameter side in the particle size distribution on a volume basis.

<<Negative electrode material for lithium-ion secondary battery>>

A negative electrode material for a lithium-ion secondary battery of the present disclosure (hereinafter, also simply referred to as a "negative electrode material") is graphite particles satisfying the following Formula (1). $0.01 y + 76.19 x \leq 256.75$ (1) in Formula (1), x is an average interplanar spacing (d₀₀₂, unit: Å) of the graphite particles as determined by an X-ray diffraction method, and y is a crystallite size Lc (nm) of the graphite particles.

By using the negative electrode material of the present disclosure, it is possible to manufacture a lithium-ion secondary battery in which expansion of a negative electrode can be suppressed when charging and discharging are repeated. The reason for this is presumed as follows.

The more the graphitization of the negative electrode material progresses, the closer the average interplanar spacing d₀₀₂ of the graphite particles approaches 3.354 Å, and the value tends to decrease.

On the other hand, the more the graphitization of the negative electrode material progresses, the larger the crystallite size of the graphite particles tends to become.

That is, the average interplanar spacing d₀₀₂ of the graphite particles and the crystallite size of the graphite particles tend to be inversely correlated. By setting the value of the left-hand side of Formula (1), which is calculated using the average interplanar spacing d₀₀₂ and the crystallite size of the graphite particles having such a relationship, to 256.75 or less, the crystallographic orientation of the graphite particles is prevented from becoming excessively high. As a result, the increase in the crystallographic orientation of the main surfaces in the negative electrode including the negative electrode material is suppressed, and a lithium-ion secondary battery capable of suppressing expansion of the negative electrode when charging and discharging are repeated can be obtained.

In addition, such graphite particles can also be readily obtained by spheroidizing a graphitizable aggregate before obtaining a mixture containing the graphitizable aggregate and a graphitizable binder, and graphitizing the mixture containing the spheroidized aggregate. The reason for this is that, by spheroidizing the aggregate in advance, even when graphitization proceeds and the average interplanar spacing decreases, growth of the crystallites of the graphite particles is suppressed, thereby suppressing an increase in crystallite size.

The negative electrode material of the present disclosure is preferably graphite particles satisfying the following Formula (2) from the viewpoint of input/output characteristics and adhesion between the negative electrode and the current collector, and more preferably graphite particles satisfying the following Formula (3) from the viewpoint of deterioration of the negative electrode due to expansion of the negative electrode and deterioration of cycle characteristics. $0.01 y + 76.19 x \leq 256.72$ (2) $0.01 y + 76.19 x \leq 256.60$ (3)

The negative electrode material of the present disclosure may also be graphite particles satisfying the following Formula (4) or Formula (5). $0.01 y + 76.19 x \geq 256.00$ (4) $0.01 y + 76.19 x \geq 256.20$ (5)

From the viewpoint of Li deposition resistance of a lithium-ion secondary battery, it is preferable that the graphite particles include artificial graphite particles. The artificial graphite particles are preferably particles obtained by graphitizing a mixture containing a graphitizable aggregate and a graphitizable binder. From the viewpoint of Li deposition resistance of a lithium-ion secondary battery, it is preferable that the graphitizable binder contains a polymer compound having water solubility or water absorbency, and it is more preferable that the graphitizable binder includes an aqueous binder containing a polymer compound having water solubility or water absorbency.

The polymer compound having water solubility or water absorbency is not particularly limited, and may include, for example, at least one selected from the group consisting of starch, amylose, amylopectin, polyacrylic acid, carboxymethylcellulose, polyvinyl alcohol, and water-soluble proteins.

### (Average particle diameter)

In the particle size distribution on a volume basis of the graphite particles measured by a laser diffraction method, a particle diameter at which the cumulative volume reaches 50% from the small-diameter side (hereinafter, also referred to as "average particle diameter" or "D50") may be 10.0 µm to 30.0 µm.

From the viewpoint of further improving Li deposition resistance, the average particle diameter of the graphite particles may be 28.0 µm or less, and may be 25.0 µm or less.

The average particle diameter of the graphite particles may be 12.0 µm or more, and may be 15.0 µm or more.

The average particle diameter of the graphite particles can be measured by a laser diffraction particle size distribution measuring apparatus (for example, SALD3100, Shimadzu Corporation).

Examples of the method for measuring the average particle diameter of graphite particles in a state of being included in a negative electrode include a method in which a sample electrode is produced, the electrode is embedded in an epoxy resin and then subjected to mirror polishing, and a cross section of the electrode is observed with a scanning electron microscope (for example, "VE-7800", manufactured by Keyence Corporation), and a method in which a cross section of an electrode is prepared using an ion milling apparatus (for example, "E-3500", manufactured by Hitachi High-Technologies Corporation) and the cross section is measured with a scanning electron microscope (for example, "VE-7800", Keyence Corporation). In this case, the average particle diameter is a median of particle diameters of any 100 particles selected.

### (D10)

The D10 of the graphite particles may be 1.0 µm to 20.0 µm, may be 3.0 µm to 18.0 µm, is more preferably 5.0 µm to 17.0 µm, and is still more preferably 7.0 µm to 17.0 µm.

The D10 of the graphite particles can be measured by a laser diffraction particle size distribution measuring apparatus (for example, SALD3100, Shimadzu Corporation).

### (D90/D10 in particle size distribution)

The D90/D10 in the particle size distribution of the graphite particles is not particularly limited, and may be 2.0 to 5.0, and may be 2.0 to 4.0.

The D90/D10 in the particle size distribution of the graphite particles can be measured by a laser diffraction particle size distribution measuring apparatus (for example, SALD3100, Shimadzu Corporation).

Examples of the method for measuring the D90/D10 in the particle size distribution of graphite particles in a state of being included in a negative electrode include a method in which a sample electrode is produced, the electrode is embedded in an epoxy resin and then subjected to mirror polishing, and a cross section of the electrode is observed with a scanning electron microscope (for example, "VE-7800", manufactured by Keyence Corporation), and a method in which a cross section of an electrode is prepared using an ion milling apparatus (for example, "E-3500", manufactured by Hitachi High-Technologies Corporation) and the cross section is measured with a scanning electron microscope (for example, "VE-7800", Keyence Corporation). In this case, the D90/D10 in the particle size distribution can be determined by the following method.
(a) Using a binarization method or the like, an area Sn (n is a particle-specific number assigned to the selected particle) of a displayed particle is determined.
(b) Assuming that the particle is an ideal true sphere, an equivalent circle diameter Ln is determined from the area Sn as Ln = √Sn/π.
(c) From the equivalent circle diameter Ln, a sphere volume Vn = (4/3)π(Ln)³ is determined.
(d) The steps (a) to (c) are repeated for 100 selected particles.
(e) A distribution curve in which the vertical axis represents a cumulative percentage of volumes of 100 particles and the horizontal axis represents particle diameters is prepared, a particle diameter at a point where the distribution curve intersects the 10% axis on the horizontal axis is defined as a 10% diameter (D10), a particle diameter at a point where the distribution curve intersects the 90% axis on the horizontal axis is defined as a 90% diameter (D90), and D90/D10 can be determined.
$\left({I}_{002}/{I}_{110}\right)$

When a negative electrode is formed using the negative electrode material of the present disclosure, from the viewpoint of input characteristics in a lithium-ion secondary battery, I₀₀₂/I₁₁₀ (also referred to as electrode orientation), which is a ratio of a peak intensity (I₀₀₂) of a 002 diffraction line to a peak intensity (I₁₁₀) of a 110 diffraction line obtained when the negative electrode pressed at 0.8 t/cm is subjected to X-ray diffraction measurement using CuKα radiation, may be 1,000 or less, may be 500 or less, and may be 400 or less.

The lower limit of I₀₀₂/I₁₁₀ is not particularly limited, and may be 200 or more.

I₀₀₂/I₁₁₀ can be determined by the method described in the Examples. When I₀₀₂/I₁₁₀ is measured, components other than graphite particles, and ratios thereof, which are conditions for producing the negative electrode, and production conditions of the negative electrode, are the same as the production conditions described in the method for measuring electrode orientation in the Examples.

### (Compressive load)

From the viewpoint of suitably suppressing deformation or the like of the graphite particles caused by pressing during negative electrode production and thereby achieving excellent input/output characteristics, a compressive load, which is a magnitude of pressure required to compress the graphite particles to a density of 1.7 g/cm³, is preferably 2.3 kN/cm² or more, more preferably 2.5 kN/cm² or more, and still more preferably 3.0 kN/cm² or more.

From the viewpoint of suppressing deformation of a current collector caused by pressing during negative electrode production and separation of the current collector from an active material, a compressive load of the graphite particles may be 6.0 kN/cm² or less, and may be 5.0 kN/cm² or less.

In the present disclosure, a compressive load of the graphite particles can be determined as follows. A predetermined mass (for example, 3.0 g) of the graphite particles is filled in a die and compressed at a constant speed (for example, 10 mm/min), and a pressure (kN/cm²) when a density of the compressed graphite particles reaches 1.7 g/cm³ is defined as the compressive load of the graphite particles.

In the above measurement, for example, a die having a diameter of 15 mm is used, and the compression is performed using an autograph (for example, manufactured by Shimadzu Corporation). The density of the graphite particles is calculated from a volume of the graphite particles, which is calculated from a bottom area of the die (for example, 1.767 cm²) and a distance from a bottom surface of the die to a pressing surface of the graphite particles, and a mass of the graphite particles.

A greater compressive load of the graphite particles means that deformation, breakage, or the like of the graphite particles caused by pressing is less likely to occur.

### (Springback ratio)

The springback ratio of the graphite particles is not particularly limited. For example, from the viewpoint of ease of densification by pressing during negative electrode production, the springback ratio may be 25% or less, and may be 23% or less.

From the viewpoint of further suppressing breakage or the like of the graphite particles caused by pressing during negative electrode production, the springback ratio of the graphite particles may be 15% or more, and may be 17% or more.

In the present disclosure, the springback ratio of the graphite particles refers to a degree of decrease in density when the graphite particles are compressed to a reference density and the pressure is then released. The greater the springback ratio, the more easily the graphite particles deformed by compression return to their original state.

Specifically, a predetermined mass (for example, 3.0 g) of the graphite particles is filled in a die and compressed at a constant speed (for example, 10 mm/min) until a density of the graphite particles reaches a reference density (for example, 1.7 g/cm³). Thereafter, the pressure is released, and when movement of the pressing surface due to elasticity has stopped, a density after the pressure release is measured. From the obtained value, the springback ratio is calculated according to the following equation. 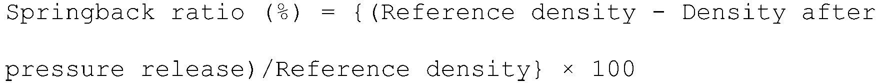 Springback ratio (%) = {(Reference density - Density after pressure release)/Reference density} × 100

In the above measurement, for example, a die having a diameter of 15 mm is used, and the compression is performed using an autograph (for example, manufactured by Shimadzu Corporation). The density of the graphite particles is calculated from a volume of the graphite particles, which is calculated from a bottom area of the die (for example, 1.767 cm²) and a distance from a bottom surface of the die to a pressing surface of the graphite particles, and a mass of the graphite particles.

The compressive load and the springback ratio of the graphite particles can be adjusted by changing physical properties or composition of a raw material for the graphite particles (for example, needle coke), or by changing conditions of graphitization.

### (0-Tap density)

From the viewpoint of facilitating improvement of input/output characteristics and compressive load in a lithium-ion secondary battery, the 0-tap density of the graphite particles is preferably 0.65 g/cm³ to 0.80 g/cm³, and more preferably 0.65 g/cm³ to 0.75 g/cm³.

The 0-tap density of the graphite particles is a value of density that is determined from a mass and a volume of a sample powder of the graphite particles, the sample powder being charged in an amount of 100 cm³ into a graduated flat-bottom test tube having a capacity of 150 cm³ (for example, KRS-406, manufactured by Kuramochi Kagaku Kikai Seisakusho K.K.) and the graduated flat-bottom test tube being sealed with a stopper, before dropping the graduated flat-bottom test tube.

### (30-Tap density)

From the viewpoint of facilitating improvement of input/output characteristics and compressive load in a lithium-ion secondary battery, the 30-tap density of the graphite particles is preferably 0.86 g/cm³ to 1.10 g/cm³, and more preferably 0.87 g/cm³ to 1.05 g/cm³.

The 30-tap density of the graphite particles is a value of density that is determined from a mass and a volume of a sample powder of the graphite particles after charging 100 cm³ of the sample powder into a graduated flat-bottom test tube having a capacity of 150 cm³ (for example, KRS-406, manufactured by Kuramochi Kagaku Kikai Seisakusho K.K.), sealing the graduated flat-bottom test tube with a stopper, and then dropping the graduated flat-bottom test tube 30 times from a height of 5 cm.

### (250-Tap density)

From the viewpoint of facilitating improvement of input/output characteristics and energy density in a lithium-ion secondary battery, the 250-tap density of the graphite particles is preferably 1.05 g/cm³ to 1.25 g/cm³, and more preferably 1.10 g/cm³ to 1.25 g/cm³.

The 250-tap density of the graphite particles is a value of density that is determined from a mass and a volume of a sample powder of the graphite particles after charging 100 cm³ of the sample powder into a graduated flat-bottom test tube having a capacity of 150 cm³ (for example, KRS-406, manufactured by Kuramochi Kagaku Kikai Seisakusho K.K.), sealing the graduated flat-bottom test tube with a stopper, and then dropping the graduated flat-bottom test tube 250 times from a height of 5 cm.

### (Compression ratio)

The compression ratio of the graphite particles represented by the following equation (6) may be 0.30 to 0.50, may be 0.32 to 0.48, and may be 0.35 to 0.45. 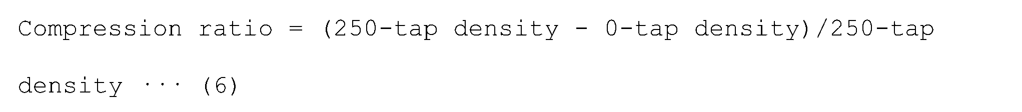 Compression ratio = (250-tap density - 0-tap density)/250-tap density ··· (6)

### (Specific surface area)

The specific surface area of the graphite particles determined by nitrogen adsorption measurement at 77 K is not particularly limited. For example, from the viewpoints of improving rapid charge/discharge performance and suppressing decomposition of an electrolyte, the specific surface area of the graphite particles is preferably 0.2 m²/g to 6.0 m²/g, more preferably 1.0 m²/g to 5.0 m²/g, and still more preferably 1.5 m²/g to 4.0 m²/g.

The specific surface area determined by nitrogen adsorption measurement at 77 K can be determined using the BET method from an adsorption isotherm obtained by nitrogen adsorption measurement at 77 K. Specifically, the specific surface area can be determined by the method described in the Examples.

The specific surface area of the graphite particles can be adjusted by a particle size distribution, a particle structure, and the like.

The specific surface area of the graphite particles may be adjusted by coating the graphite particles with low-crystalline carbon or the like, and may be adjusted by an amount of an aqueous binder when the aqueous binder is used as a graphitizable binder. When it is desired to reduce a particle diameter, the specific surface area greatly increases due to irregularities generated by pulverization, but the specific surface area can be adjusted by smoothing the irregularities with a coating material through coating.

### (Circularity)

From the viewpoint of Li deposition resistance in a lithium-ion secondary battery, the circularity of the graphite particles may be 90.7% or more, and may be 91.0% or more. The circularity of the graphite particles may be 95.0% or less, and may be 93.0% or less.

In the present disclosure, the circularity can be measured with a wet flow particle diameter and shape analyzer, and the circularity may be defined as a circularity on a number basis at a cumulative 50% (so-called average circularity).

### (Oil absorption)

The oil absorption of the graphite particles is preferably 45 mL/100 g or less, more preferably 40 mL/100 g or less, and still more preferably 35 mL/100 g or less.

The lower limit of the oil absorption of the graphite particles is not particularly limited, and may be, for example, 20 mL/100 g or more, and may be 25 mL/100 g or more.

The oil absorption of the graphite particles is an index of the amount of pores present inside and on the surface of the particles, and voids between the particles.

When the oil absorption of the graphite particles is 45 mL/100 g or less, it is considered that the amount of pores present inside and on the surface of the particles is small, and the contact area with an electrolyte is sufficiently small. In addition, since the interface is small, it is possible to reduce an amount of a binder when producing a negative electrode, which tends to be possible to reduce electric resistance and improve battery performance. Furthermore, since the pores are few, it is possible to reduce a solvent used in drying an electrode, and there are advantages also in terms of cost and environment of a production line, such as suppression of equipment and electric power required for drying.

When the oil absorption of the graphite particles is 20 mL/100 g or more, it tends to be possible to suppress an increase in slurry viscosity when kneading with a binder or the like, which occurs when voids between the particles are excessively small. In addition, the binder tends to spread favorably and becomes easier to knead. In addition, voids between the particles for migration of lithium ions tend to be easily secured.

In the present disclosure, the oil absorption of the graphite particles is measured by a method described in JIS K 6217-4:2017 "Carbon black for rubber industry - Fundamental characteristics- Part 4: Determination of oil absorption number (OAN)", in which linseed oil (for example, manufactured by KANTO CHEMICAL CO., INC.) is used as a reagent liquid instead of dibutyl phthalate (DBP).

Specifically, linseed oil is titrated to the target powder with a constant-rate burette, and a change in viscosity characteristics is measured with a torque detector. The oil absorption (mL/100 g) is defined as the amount of linseed oil added per unit mass of the target powder corresponding to a torque of 70% of a maximum torque generated. As the measuring instrument, for example, an oil absorption measuring apparatus (product name: S-500) manufactured by Asahisouken Corporation may be used.

### (Degree of graphitization)

From the viewpoint of discharge capacity when a lithium-ion secondary battery is manufactured, the degree of graphitization of the graphite particles is preferably 90.0% or more, more preferably 90.5% or more, still more preferably 91.0% or more, and particularly preferably 92.0% or more.

The upper limit of the degree of graphitization of the graphite particles is not particularly limited, and may be 100% or less. From the viewpoint of cycle characteristics when a lithium-ion secondary battery is manufactured, the degree of graphitization is preferably 95.0% or less, more preferably 94.0% or less, and still more preferably 93.5% or less.

The graphite particles may be subjected to a treatment of coating low-crystalline carbon on the surface, or may not be subjected to the treatment of coating low-crystalline carbon on the surface.

When the surface of the graphite particles is subjected to a treatment of coating low-crystalline carbon, charging characteristics at a low temperature tend to be further improved at the configuration of a lithium-ion secondary battery.

On the other hand, when the surface of the graphite particles is not subjected to a treatment of coating low-crystalline carbon, cracks, peeling, and the like tend to occur in the graphite particles during pressing in electrode production, and it tends to be possible to suppress deterioration of storage characteristics caused by increased decomposition activity of an electrolyte. In addition, this provides an advantage that the degree of freedom in manufacturing conditions is increased. Furthermore, in the negative electrode material of the present disclosure, even when low-crystalline carbon is not disposed on the surface, deposition of lithium metal during charging can be suppressed.

When the graphite particles are artificial graphite particles graphitized using a graphitizable binder including the above-described aqueous binder (for example, an aqueous binder containing a compound such as starch that does not include an aromatic ring), a compound such as starch that does not include an aromatic ring is less likely to change into graphite. Therefore, the surface crystallinity of the graphite particles tends to be lowered, and favorable charging characteristics at a low temperature tend to be obtained even when a treatment of coating low-crystalline carbon on the surface of the graphite particles is omitted. Accordingly, by producing artificial graphite particles using the above-described aqueous binder, it is possible to achieve both simplification of the process and improvement of charging characteristics.

The R value of the graphite particles may be 0.10 to 0.40, and may be 0.15 to 0.30. In particular, no treatment of coating low-crystalline carbon is performed on the surface, and the R value is preferably 0.10 to 0.40, and more preferably 0.15 to 0.30.

The R value is an intensity ratio Id/Ig of an intensity Ig of a maximum peak in a range of 1,580 cm⁻¹ to 1,620 cm⁻¹ and an intensity Id of a maximum peak in a range of 1,300 cm⁻¹ to 1,400 cm⁻¹ in a Raman spectrum obtained by Raman spectroscopy.

In the Raman spectroscopy, the peak intensity Ig in a range of 1,580 cm⁻¹ to 1,620 cm⁻¹ is a peak identified as corresponding to a graphite crystal structure, and is, for example, a peak appearing around 1,580 cm⁻¹.

An intensity Id of a peak in a range of 1,300 cm⁻¹ to 1,400 cm⁻¹ is a peak identified as corresponding to an amorphous structure of carbon, and is, for example, a peak appearing around 1,360 cm⁻¹.

The R value of the graphite particles may be determined by measuring a Raman spectrum under the following conditions using a Raman spectrometer (for example, XploRA PLUS, manufactured by Horiba, Ltd.). In this case, an arithmetic average value of 400 measured particles is defined as the R value.

### -Measurement conditions of Raman spectrum-

· Laser wavelength: 532 nm
·Laser power: 100 mW or more
·Attenuation filter: 1%
·Irradiation power: 1 mW
·Measurement range: 1,000 cm⁻¹ to 1,800 cm⁻¹
· Irradiation time: 30 seconds
·Irradiation area: 1 µm²
·Baseline (D band): 1,100 cm⁻¹ to 1,470 cm⁻¹
·Baseline (G band): 1,450 cm⁻¹ to 1,710 cm⁻¹
·Number of accumulations per particle: 2 times
·Number of measured particles: 400 particles

In the present disclosure, a carbon material having an average interplanar spacing (d₀₀₂) of less than 3.40 Å as determined by an X-ray diffraction method is defined as graphite.

In the present disclosure, as described below, particles in which low-crystalline carbon is disposed on at least a part of the surface of graphite particles are also defined as "graphite particles".

The theoretical value of the average interplanar spacing (d₀₀₂) of the graphite crystal is 3.354 Å. The closer to this value, the more advanced graphitization is.

From the viewpoints of initial charge/discharge efficiency and energy density of a lithium-ion secondary battery, the average interplanar spacing (d₀₀₂) is preferably 3.361 Å or less, more preferably 3.3605 Å or less, and still more preferably 3.360 Å or less.

From the viewpoint of achieving excellent input/output characteristics and excellent adhesion between the negative electrode and the current collector in a lithium-ion secondary battery, the average interplanar spacing (d₀₀₂) is preferably 3.358 Å or more, more preferably 3.359 Å or more, and still more preferably 3.3595 Å or more.

From the above viewpoint, the average interplanar spacing (d₀₀₂) of the graphite particles is preferably 3.358 Å to 3.361 Å, more preferably 3.359 Å to 3.3605 Å, and still more preferably 3.3595 Å to 3.360 Å.

The average interplanar spacing (d₀₀₂) of the graphite particles can be calculated using Bragg's equation, based on a diffraction peak corresponding to a carbon 002 plane appearing around a diffraction angle 2θ of 24° to 27° in a diffraction profile obtained by irradiating a sample with X-rays (CuKα radiation) and measuring a diffraction line with a goniometer. The average interplanar spacing (d₀₀₂) can be measured under the following conditions.
Radiation source: CuKα radiation (wavelength = 0.15418 nm)
Output: 40 kV, 20 mA
Sampling width: 0.010°
Scanning range: 10° to 35°
Scanning speed: 0.5°/min
Bragg's equation: $2 dsin θ = n λ ;$

Here, d represents a length of one period, θ represents a diffraction angle, n represents an order of reflection, and λ represents an X-ray wavelength.

The crystallite size Lc of the graphite particles may be 30 nm to 100 nm, and may be 35 nm to 80 nm, and may be 40 nm to 75 nm.

From the viewpoints of facilitating the manufacture of a lithium-ion secondary battery having excellent input/output characteristics and excellent adhesion between a negative electrode and a current collector, the crystallite size Lc of the graphite particles is preferably 80 nm or less.

### <<Method for producing negative electrode material for lithium-ion secondary battery>>

A method for producing a negative electrode material for a lithium-ion secondary battery for producing the negative electrode material for a lithium-ion secondary battery of the present disclosure includes a step of graphitizing coke. More specifically, from the viewpoints of improving handleability in a graphitization treatment and the like and improving cycle characteristics of a lithium-ion secondary battery, the method for producing a negative electrode material for a lithium-ion secondary battery of the present disclosure preferably includes the following steps (a) to (d):
(a) a step of obtaining a mixture containing a graphitizable aggregate (coke) and a graphitizable binder;
(b) a step of molding the mixture to obtain a molded body;
(c) a step of graphitizing the molded body to obtain a graphitized product; and
(d) a step of pulverizing the graphitized product to obtain a pulverized product.

Note that the respective steps of the above method may be performed continuously or may be performed non-continuously. The respective steps of the above method may be performed at the same location or may be performed at different locations.

The type of coke used in the production method is not particularly limited, and examples thereof include petroleum-based or coal-based cokes such as fluid coke, needle coke, mosaic coke, and semi-needle coke having properties intermediate between needle coke and mosaic coke.

The method for obtaining particles of coke (coke particles) is not particularly limited and can be performed by a known method. The particle diameter of the coke particles is not particularly limited, and can be selected in consideration of a desired particle diameter, particle structure, and the like of the graphite particles. In order to obtain particles having a lower specific surface area, it is preferable to pulverize the coke in a green coke state. Such particles have fewer voids, cracks and the like caused by cleavage, and tend to exhibit higher compressive load of the graphite particles.

In the production method of the present disclosure, after obtaining a mixture containing a graphitizable aggregate and a graphitizable binder, the mixture is molded to obtain a molded body. In the production method of the present disclosure, from the viewpoint of Li deposition resistance of a lithium-ion secondary battery, it is preferable that the graphitizable binder contains a polymer compound having water solubility or water absorbency, and it is more preferable that the graphitizable binder includes an aqueous binder containing a polymer compound having water solubility or water absorbency.

Since the strength of the molded body is improved by using the above-described aqueous binder, handleability in subsequent processes such as a graphitization treatment is also improved. When the strength of the molded body is improved, the graphitized product obtained after a graphitization treatment generally tends to be less easily pulverized. However, in the above production method, by using the above-described aqueous binder, the strength of the molded body can be improved while allowing the graphitized product to be easily pulverized.

In the above production method, the reason why the strength of the molded body can be improved while allowing the graphitized product to be easily pulverized is presumed as follows. Note that the present disclosure is not limited to the following assumptions.

In the above production method, by using an aqueous binder containing a polymer compound having water solubility or water absorbency, the aggregate is incorporated into the binder swollen with moisture. Accordingly, during molding of the mixture, the surface of the graphitizable aggregate becomes more slippery, the arrangement of the mixture proceeds, and voids are reduced. As a result, the density and strength of the molded body tend to be improved. Furthermore, since moisture not incorporated into the binder fills gaps between the aggregates to generate liquid bridging, the strength of the molded body is improved.

In the above production method, after the molded body is subjected to a heat treatment by heating as necessary, the molded body is graphitized to obtain a graphitized product. By using an aqueous binder, moisture volatilizes during processes such as a heat treatment and graphitization. Therefore, the molded body before processes such as a heat treatment and graphitization has a high density, whereas the graphitized product after graphitization has a reduced density. Accordingly, the graphitized product can be easily pulverized.

Furthermore, in the above production method, the graphitized product can be easily pulverized, and as a result, a pulverized product having a small specific surface area is more easily obtained. By using a negative electrode material containing a pulverized product having a small specific surface area in the manufacture of a lithium-ion secondary battery, the contact area with an electrolyte of the negative electrode material can be reduced. As a result, the decomposition reaction of the electrolyte can be suppressed to extend the life of the battery, and as a result, the lithium-ion secondary battery tends to have excellent cycle characteristics.

Conventionally, when green coke was used, there were problems in that molding was difficult and the strength of the molded body was low, and it was necessary to improve moldability, the strength of the molded body or the like by, for example, subjecting the green coke to a heat treatment. On the other hand, in the above production method, even when green coke is used without a heat treatment, excellent moldability can be achieved and a molded body having high strength can be obtained. Accordingly, as the graphitizable aggregate, green coke subjected to a heat treatment may be used for forming a molded body, and green coke not subjected to a heat treatment may also be used for forming a molded body.

In the above production method, since the molded body has excellent strength, it is not necessary to pack the mixture into a crucible for graphitization when performing graphitization. That is, it is not necessary to use a crucible or the like for graphitization, and it is possible to perform graphitization by placing only the molded body in the graphite furnace. Therefore, compared with the case of using a crucible or the like for graphitization, the production efficiency of the negative electrode material for a lithium-ion secondary battery tends to be superior.

In general, the strength of the molded body can be enhanced by increasing the amount of the graphitizable binder. However, when the amount of the graphitizable binder is excessive, the density of the graphitized product tends to be high, the graphitized product tends to be less easily pulverized, and battery characteristics such as initial charge/discharge efficiency of the negative electrode material are likely to deteriorate. In the present embodiment, it is possible to enhance the strength of the molded body without increasing the amount of the graphitizable binder, and deterioration of battery characteristics due to excessive use of the binder can also be prevented. Furthermore, by reducing the amount of the binder, the formation of a coating derived from hard carbon on the surface of the pulverized product is also facilitated, and the input characteristics of the lithium-ion secondary battery also tend to be improved.

In the step (a), a mixture containing a graphitizable aggregate and a graphitizable binder is obtained. The mixing may be performed at a temperature at which the graphitizable binder softens. Specifically, when the graphitizable binder is pitch, tar, or the like, the temperature may be 50°C to 300°C, and when the binder is a thermosetting resin, the temperature may be 20°C to 100°C. Note that, when the graphitizable binder is an aqueous binder containing a polymer compound having water solubility or water absorbency, the mixing may be performed at room temperature or may be performed by heating.

The mixing method is not particularly limited. For example, it is preferable to perform the mixing by using a planetary mixer, a kiln-type mixer, a paddle agitator, or the like. A kneader or the like, which is referred to as a kneading machine and involves kneading, may also be used.

When the graphitizable aggregate is in the form of particles, the average particle diameter (D50) of the graphitizable aggregate is preferably 10 µm to 30 µm, more preferably 12 µm to 28 µm, and still more preferably 15 µm to 25 µm.

The standard deviation of the particle size distribution of the graphitizable aggregate is preferably 0.35 or less, more preferably 0.20 or less, still more preferably 0.18 or less, and particularly preferably 0.16 or less. By setting the standard deviation of the particle size distribution of the aggregate to 0.35 or less, variation in the particle size of the aggregate can be reduced, and variation in the particle size of the obtained pulverized product can also be suppressed. By using a negative electrode material containing a pulverized product having small variation in particle diameter in the manufacture of a lithium-ion secondary battery, the resistance distribution in the negative electrode can be made uniform. As a result, the rapid charging performance of the lithium-ion secondary battery tends to be improved. Furthermore, by reducing variation in the particle size of the aggregate, it is possible to suitably ensure the function as a binder even when the content ratio or content of the graphitizable binder is reduced. The standard deviation of the particle size distribution is, for example, a value (on a volume basis) measured by a laser diffraction method.

The lower limit of the standard deviation of the particle size distribution of the graphitizable aggregate is not particularly limited, and may be, for example, 0.05 or more, and may be 0.10 or more.

Examples of methods for adjusting the average particle diameter of the graphitizable aggregate and the standard deviation of the particle size distribution of the graphitizable aggregate to the above-described ranges include sieving classification, air classification, and wet classification.

The graphitizable aggregate may be spheroidized before obtaining a mixture containing the graphitizable aggregate and a graphitizable binder. The spheroidization treatment time may be 5 minutes to 2 hours, and may be 10 minutes to 1 hour. By performing the spheroidization treatment, graphite particles satisfying Formula (1) can be readily obtained.

From the viewpoint of easily obtaining graphite particles having high circularity, the circularity of the graphitizable aggregate may be 90.0% or more, and may be 90.5% or more.

The circularity of the graphite particles may be 97.0% or less, and may be 96.0% or less.

The graphitizable binder is not particularly limited as long as it can be graphitized by a graphitization treatment. Specifically, examples thereof include the above-described aqueous binder, coal-based, petroleum-based, or synthetic pitch and tar, a thermoplastic resin, and a thermosetting resin.

The graphitizable aggregate and the graphitizable binder contained in the mixture may each be only one type or two or more types.

The content of each material in the mixture is not particularly limited. For example, the content of the graphitizable binder may be 10 parts by mass to 30 parts by mass, more preferably 12 parts by mass to 25 parts by mass, and still more preferably 14 parts by mass to 20 parts by mass, with respect to 100 parts by mass of the graphitizable aggregate. In the case where the binder is added to a solvent or a dispersion medium and used as a solution or a dispersion, the parts by mass of the solvent or the dispersion medium are excluded. When the content of the binder is 10 parts by mass or more, the binder tends to suitably function as a binder for the graphitizable aggregate. When the content of the binder is 30 parts by mass or less, the amount of fixed carbon in the mixture can be sufficiently ensured, and the yield tends to be excellent.

The graphitizable aggregate and the graphitizable binder contained in the mixture may each be only one type or two or more types.

The mixture may contain other components in addition to the graphitizable aggregate and the graphitizable binder. Examples of the other components include an aromatic compound, graphite, a dispersant, and a graphitization catalyst.

The aromatic compound is not particularly limited as long as it is a compound having an aromatic ring. As the aromatic compound, a compound having an aromatic ring and having a molecular weight of 500 or less may be used, and a compound having a molecular weight of 300 or less may also be used.

Examples of the aromatic compound include naphthalene, methyl naphthalenes such as 1-methylnaphthalene and 2-methylnaphthalene, acenaphthene, biphenyl, fluorene, benzopyrene, benzoanthracene, dibenzoanthracene, diphenylene oxide, quinoline, and isoquinoline.

The aromatic compound contained in the mixture may be only one type or two or more types.

Among them, from the viewpoint of moldability when forming a molded body, methyl naphthalene and naphthalene are preferable as the aromatic compounds.

When the mixture contains an aromatic compound, the amount thereof is not particularly limited. The content ratio of the aromatic compound in the mixture is preferably 1 mass% or less, more preferably 0.5 mass% or less, and still more preferably 0 mass%, with respect to the total amount of the mixture.

The mixture may contain graphite. Examples of the graphite include natural graphite and artificial graphite. The graphite is preferably in the form of particles. The mixture may contain only one type of graphite, or may contain two or more types of graphites.

From the viewpoint of facilitating dispersion of the components in the mixture in the step (b) described below, it is preferable that the mixture contains a dispersant. By containing a dispersant, the mixture can suppress variation in particle size of the pulverized product obtained by pulverizing the graphitized product, and a pulverized product having a uniform particle size can be easily obtained. As a result, the rapid charging performance of the lithium-ion secondary battery tends to be improved.

Furthermore, inclusion of a dispersant in the mixture leads to suppression of the amount of the graphitizable binder, and improvement of battery characteristics such as initial charge/discharge efficiency of the negative electrode material can also be expected.

The type of dispersant is not particularly limited. Specifically, examples of the dispersant include hydrocarbons such as liquid paraffin, paraffin wax, and polyethylene wax, fatty acids such as stearic acid, oleic acid, erucic acid, and 12-hydroxystearic acid, fatty acid metal salts such as zinc stearate, lead stearate, aluminum stearate, calcium stearate, and magnesium stearate, fatty acid amides such as stearamide, oleamide, erucamide, methylenebis(stearamide), and ethylenebis(stearamide), fatty acid esters such as stearic acid monoglyceride, stearyl stearate, and hardened oils, and higher alcohols such as stearyl alcohol. Among them, fatty acids are preferable since they are less likely to affect the performance of the negative electrode material, are easy to handle because they are solid at room temperature, are uniformly dispersed by melting at the temperature of the step (a), disappear in the process until the graphitization treatment, and are inexpensive, and stearic acid is more preferable.

When the mixture contains a dispersant, the amount thereof is not particularly limited. For example, the content ratio of the dispersant with respect to the total mixture may be 0.1 mass% to 20 mass%, may be 0.5 mass% to 10 mass%, and may be 0.5 mass% to 5 mass%.

From the viewpoint of promoting graphitization of the graphitizable aggregate or the graphitizable binder, it is preferable that the mixture contains a graphitization catalyst. The type of graphitization catalyst is not particularly limited. Specifically, examples thereof include substances having a graphitization catalytic effect such as silicon, iron, nickel, titanium, and boron, carbides of these substances, oxides of these substances, and nitrides of these substances.

When the mixture contains a graphitization catalyst, the amount thereof is not particularly limited. For example, the content ratio of the graphitization catalyst with respect to the total mixture may be 0.1 mass% to 50 mass%, may be 0.5 mass% to 40 mass%, and may be 0.5 mass% to 30 mass%.

In the step (b), the mixture obtained in the step (a) is molded to obtain a molded body. Preferably, the mixture is molded into a predetermined shape by uniaxial pressing or the like. Molding in this manner allows an increase in the packing amount into the graphitization furnace during graphitization of the mixture, thereby improving productivity and enhancing the effect of the graphitization catalyst.

In the step (b), the method for molding the mixture is not particularly limited. Examples of the method for molding the mixture include a mold molding method in which the mixture is placed in a container such as a mold and pressed in a uniaxial direction, a vibration molding method in which the mixture is placed in a container such as a mold, a weight is placed on an upper surface, and vibration and impact are applied to a mold frame for molding, and an extrusion molding method in which the mixture is extruded from a nozzle or the like by a side press for molding.

In the step (b), the density of the molded body obtained is not particularly limited, and from the viewpoints of productivity of the negative electrode material and cycle characteristics of the lithium-ion secondary battery, the density of the molded body is preferably 0.8 g/cm³ to 1.7 g/cm³, more preferably 1.0 g/cm³ to 1.5 g/cm³, and still more preferably 1.2 g/cm³ to 1.5 g/cm³.

The amount of fixed carbon of the graphitizable binder in the mixture is preferably 20 mass% or less, more preferably 15 mass% or less, still more preferably 10 mass% or less, and particularly preferably 5 mass% or less, with respect to a total of 100 mass% of the aggregate and binder (before graphitization). The lower the amount of fixed carbon of the graphitizable binder in the mixture, the higher the coke ratio in the mixture, and the discharge capacity of the lithium-ion secondary battery tends to be improved.

The lower limit of the amount of fixed carbon of the graphitizable binder in the mixture is not particularly limited, and may be 0.5 mass% or more, and may be 1.0 mass% or more, with respect to a total of 100 mass% of the aggregate and binder (before graphitization).

The molded body obtained in the step (b) is preferably subjected to a heat treatment before the molded body is graphitized in the step (c). By performing the heat treatment, organic components contained in the mixture that do not contribute to graphitization are removed, and generation of gas in the graphitization treatment tends to be suppressed.

The temperature of the heat treatment is not particularly limited, and is preferably lower than the temperature of the heat treatment in the step (c). For example, the heat treatment may be performed within a range of 500°C to 1,000°C.

In the step (c), the molded body obtained in the step (b) is graphitized. The method for graphitizing the molded body is not particularly limited as long as the graphitizable components contained in the mixture can be graphitized under the conditions. Examples thereof include a method of performing a heat treatment of the mixture in an atmosphere less likely to cause oxidation. The atmosphere less likely to cause oxidation of the mixture is not particularly limited, and examples thereof include an inert atmosphere such as nitrogen or argon, and vacuum.

The temperature of the heat treatment for graphitization may be, for example, 1,500°C or higher, 2,000°C or higher, 2,500°C or higher, or 2,800°C or higher. The upper limit of the temperature of the heat treatment is not particularly limited, and may be, for example, 3,200°C or lower. When the temperature of the heat treatment is 1,500°C or higher, a change in the crystal occurs, and graphitization tends to proceed more easily. When the temperature of the heat treatment is 2,000°C or higher, the development of graphite crystals tends to be more favorable. On the other hand, when the temperature of the heat treatment for graphitization is 3,200°C or lower, sublimation of a part of the graphite tends to be suppressed.

In the step (d), the graphitized product obtained in the step (c) is pulverized to obtain a pulverized product. The pulverization method is not particularly limited, and can be performed by a known method using a jet mill, a vibration mill, a pin mill, a hammer mill, or the like. The particle diameter of the pulverized product may be adjusted so as to obtain a desired size. The method of adjusting the particle diameter is not particularly limited, and examples thereof include a method of using the above-described pulverization apparatus and a method of using a sieve.

If necessary, on the pulverized product obtained in the step (d), (e) a step of disposing low-crystallinity carbon on at least a part of the surface of the pulverized product, (f) a step of mixing the pulverized product with another negative electrode active material, and the like may be performed.

Examples of the method of disposing low-crystallinity carbon on at least a part of the surface of the pulverized product in the step (e) include a method of mixing the pulverized product with a substance (such as a resin) that can become low-crystallinity carbon by a heat treatment and then performing a heat treatment. When low-crystallinity carbon is disposed on at least a part of the surface of the pulverized product, the input/output characteristics, such as the rapid charge/discharge characteristics, of a lithium-ion secondary battery using the low-crystallinity carbon as a negative electrode material may be improved.

### [Other steps]

The method for producing a negative electrode material of the present disclosure may include steps other than the above-described steps.

For example, the method for producing a negative electrode material may include a step of adhering an organic compound to the surface of secondary particles after graphitization, and then performing a heat treatment. By adhering an organic compound to the surface of secondary particles and performing a heat treatment, the organic compound adhered to the surface is converted into low-crystallinity carbon. As a result, the surface of the graphite particles can be coated with low-crystallinity carbon.

The method of adhering an organic compound to the surface of the secondary particles is not particularly limited. Examples thereof include a wet method in which secondary particles are dispersed and mixed in a mixed solution obtained by dissolving or dispersing an organic compound in a solvent, and then removing the solvent to cause adhesion; and a dry method in which mechanical energy is applied to a mixture obtained by mixing the secondary particles with a solid organic compound to cause adhesion.

The organic compound is not particularly limited as long as it is a substance (carbon precursor) that is converted into low-crystallinity carbon by a heat treatment. Examples thereof include petroleum pitch, naphthalene, anthracene, phenanthroline, coal tar, a phenol resin, and polyvinyl alcohol. The organic compounds may be used alone as a single type or in combination of two or more types.

The temperature of the heat treatment when the secondary particles having an organic compound adhered to the surface are subjected to a heat treatment is not particularly limited as long as it is a temperature at which the organic compound adhered to the surface of the secondary particles is converted into low-crystallinity carbon, and is preferably, for example, 400°C to 1,500°C. From the viewpoint of particularly enhancing heat resistance, it is more preferable that the temperature be 1,000°C to 1,500°C. The heat treatment is preferably performed, for example, in an inert gas atmosphere such as a nitrogen atmosphere.

The method of mixing the pulverized product with another negative electrode active material in the step (f) is not particularly limited. By mixing the pulverized product with another negative electrode active material, the desired characteristics of the lithium-ion secondary battery may be improved as compared with the case where only the pulverized product is used as the negative electrode active material. Examples of the other negative electrode active material include graphite particles such as natural graphite and artificial graphite, and particles containing an element capable of occluding and releasing lithium ions, but are not limited thereto. The element capable of occluding and releasing lithium ions is not particularly limited, and examples thereof include Si, Sn, Ge, and In.

The pulverized product obtained in the step (f) may include particles in which a plurality of plate-like graphite particles are aggregated or bonded together, and may also include particles in which a plurality of plate-like graphite particles are aggregated or bonded together such that the main surfaces of the graphite particles are not parallel to each other (hereinafter, also referred to as graphite secondary particles).

When the pulverized product is in the state of graphite secondary particles, the phenomenon in which the particles of the negative electrode material are oriented along the direction of the current collector during pressing for densification of the negative electrode is suppressed, and sufficient pathways for lithium ions to enter and exit the negative electrode material tend to be ensured.

Furthermore, by including particles in which a plurality of plate-like graphite particles are aggregated or bonded together, the voids present between the plurality of plate-like graphite particles alleviate the influence of the pressure applied during pressing on individual graphite particles, and the breakage of the graphite particles, the occurrence of cracks, or the like tend to be suppressed. As a result, the lithium-ion secondary battery tends to exhibit excellent resistance to Li deposition.

In the present disclosure, the term "plate-like graphite particles" refers to non-spherical graphite particles having anisotropy in shape. Examples of the plate-like graphite particles include graphite particles having shapes such as scaly, flaky, or partially massive.

An aspect ratio of the plate-like graphite particles, represented by A/B where A is the length in the major axis direction and B is the length in the minor axis direction, is preferably, for example, 1.2 to 20, and more preferably 1.3 to 10. When the aspect ratio is 1.2 or more, the contact area between particles increases, and the conductivity tends to be further improved. When the aspect ratio is 20 or less, the input/output characteristics, such as the rapid charge/discharge performance, of the lithium-ion secondary battery tend to be further improved.

The aspect ratio is obtained by observing graphite particles with a microscope, selecting any 100 graphite particles, measuring each A/B, and taking the arithmetic average value of the measured values. In the observation of the aspect ratio, the length A in the major axis direction and the length B in the minor axis direction are measured as follows. That is, in a projected image of a graphite particle observed using a microscope, two parallel tangents tangent to the outer periphery of the graphite particle, whose distance is the maximum, are selected as tangent a1 and tangent a2, and the distance between the tangent a1 and the tangent a2 is defined as the length A in the major axis direction. Two parallel tangents tangent to the outer periphery of the graphite particle, whose distance is the minimum, are selected as tangent b1 and tangent b2, and the distance between tangent b1 and tangent b2 is defined as the length B in the minor axis direction.

In the present disclosure, the expression "the main surfaces of the graphite secondary particles are non-parallel" refers to a state in which the surfaces having the largest cross-sectional area (the main surfaces) of a plurality of plate-like graphite particles are not aligned in a certain direction. Whether the main surfaces of the plurality of plate-like graphite particles are non-parallel to each other can be confirmed by microscopic observation. By the plurality of plate-like graphite particles being aggregated or bonded in a state in which their main surfaces are non-parallel to each other, an increase in the orientation of the main surfaces of the plate-like graphite particles in the negative electrode is suppressed, expansion of the negative electrode accompanying charging is suppressed, and the cycle characteristics of the lithium-ion secondary battery tend to be further improved.

Note that the graphite secondary particles may partially include a structure in which a plurality of plate-like graphite particles are aggregated or bonded together so that their respective main surfaces are parallel.

From the viewpoint of ease of aggregation or bonding, the average particle diameter of the plate-like graphite particles is preferably, for example, 1 µm to 50 µm, more preferably 1 µm to 25 µm, and still more preferably 1 µm to 15 µm. Examples of a method for measuring the average particle diameter of the plate-like graphite particles include a measurement method using a scanning electron microscope, and the average particle diameter of the plate-like graphite particles is, for example, the arithmetic mean of the particle diameters of 100 plate-like graphite particles.

### <<Negative electrode material composition for lithium-ion secondary battery>>

A negative electrode material composition for a lithium-ion secondary battery contains the negative electrode material for a lithium-ion secondary battery of the present disclosure, a binder, and a solvent. The negative electrode material composition for a lithium-ion secondary battery of the present disclosure may be in the form of a slurry obtained by kneading the negative electrode material for a lithium-ion secondary battery and a binder together with a solvent.

The kneading can be performed using a dispersing apparatus such as a disperser or a planetary kneader.

The binder used for preparing the negative electrode material composition for a lithium-ion secondary battery is not particularly limited. Examples of the binder include styrene-butadiene copolymer (SBR); a homopolymer or a copolymer of an ethylenically unsaturated carboxylic acid ester such as methyl acrylate, methyl methacrylate, ethyl acrylate, ethyl methacrylate, butyl acrylate, butyl methacrylate, hydroxyethyl acrylate, or hydroxyethyl methacrylate, or an ethylenically unsaturated carboxylic acid such as acrylic acid, methacrylic acid, itaconic acid, fumaric acid, or maleic acid; and polymer compounds having a high degree of ion conductivity such as polyvinylidene fluoride, polyethylene oxide, polyepichlorohydrin, polyphosphazene, polyacrylonitrile, and polymethacrylonitrile. When the negative electrode material composition for a lithium-ion secondary battery contains a binder, the content of the binder is not particularly limited. For example, the content of the binder may be 0.5 parts by mass to 20 parts by mass with respect to a total of 100 parts by mass of the negative electrode material for a lithium-ion secondary battery and the binder.

The negative electrode material composition for a lithium-ion secondary battery may contain a thickener. As the thickener, carboxymethyl cellulose, methyl cellulose, hydroxymethyl cellulose, ethyl cellulose, polyvinyl alcohol, polyacrylic acid or a salt thereof, oxidized starch, phosphorylated starch, casein, and the like can be used. When the negative electrode material composition for a lithium-ion secondary battery contains a thickener, the content of the thickener is not particularly limited. For example, the content of the thickener may be 0.1 parts by mass to 5 parts by mass with respect to 100 parts by mass of the negative electrode material for a lithium-ion secondary battery.

The negative electrode material composition for a lithium-ion secondary battery may contain a conductive auxiliary agent. Examples of the conductive auxiliary agent include carbon materials such as carbon black, graphite, and acetylene black, and inorganic compounds such as oxides exhibiting conductivity and nitrides exhibiting conductivity. When the negative electrode material composition for a lithium-ion secondary battery contains a conductive auxiliary agent, the content of the conductive auxiliary agent is not particularly limited. For example, the content of the conductive auxiliary agent may be 0.5 parts by mass to 15 parts by mass with respect to 100 parts by mass of the negative electrode material for a lithium-ion secondary battery.

### <<Negative electrode for lithium-ion secondary battery>>

A negative electrode for a lithium-ion secondary battery of the present disclosure includes a negative electrode material layer including the negative electrode material for a lithium-ion secondary battery of the present disclosure and a current collector. The negative electrode for a lithium-ion secondary battery may include, in addition to the negative electrode material layer including the negative electrode material for a lithium-ion secondary battery of the present disclosure and the current collector, other constituent elements as necessary.

The negative electrode for a lithium-ion secondary battery can be produced, for example, by preparing the above-described negative electrode material composition for a lithium-ion secondary battery of the present disclosure, coating the negative electrode material composition on a current collector to form a negative electrode material layer, or by molding the negative electrode material composition for a lithium-ion secondary battery into a shape such as a sheet or a pellet and integrating the molded negative electrode material composition with a current collector.

The material of the current collector is not particularly limited and can be selected from aluminum, copper, nickel, titanium, stainless steel, and the like. The form of the current collector is also not particularly limited and can be selected from a foil, a punched foil, a mesh, and the like. In addition, porous materials such as porous metal (foamed metal) and carbon paper can also be used as the current collector.

When the negative electrode material composition for a lithium-ion secondary battery is applied to a current collector to form a negative electrode material layer, the method is not particularly limited, and known methods such as a metal mask printing method, an electrostatic coating method, a dip coating method, a spray coating method, a roll coating method, a doctor blade method, a comma coating method, a gravure coating method, and a screen printing method can be employed. After the negative electrode material composition for a lithium-ion secondary battery is applied to the current collector, the solvent contained in the negative electrode material composition for a lithium-ion secondary battery is removed by drying. The drying can be performed using, for example, a hot-air dryer, an infrared dryer, or a combination of these devices. If necessary, a rolling treatment may be performed on the negative electrode material layer. The rolling treatment can be performed by a method such as a flat plate press or a calendar roll.

When the negative electrode material composition for a lithium-ion secondary battery molded into a shape such as a sheet or a pellet is integrated with a current collector to form a negative electrode material layer, the method of integration is not particularly limited. For example, the integration can be performed by a roll, a flat plate press, or a combination of these means. The pressure at the time of integrating the negative electrode material composition for a lithium-ion secondary battery with a current collector is preferably, for example, about 1 MPa to 200 MPa.

The negative electrode density of the negative electrode material layer is not particularly limited, and is preferably, for example, 1.1 g/cm³ to 1.8 g/cm³, more preferably 1.1 g/cm³ to 1.7 g/cm³, and still more preferably 1.1 g/cm³ to 1.6 g/cm³. By setting the negative electrode density to 1.1 g/cm³ or higher, an increase in electrical resistance is suppressed and the capacity tends to increase, and by setting the negative electrode density to 1.8 g/cm³ or lower, a decrease in input characteristics and cycle characteristics tends to be suppressed.

### <<Lithium-ion secondary battery>>

A lithium-ion secondary battery of the present disclosure includes the negative electrode for a lithium-ion secondary battery of the present disclosure, a positive electrode, and an electrolyte.

The positive electrode can be obtained by forming a positive electrode material layer on a current collector in the same manner as the method for producing a negative electrode described above. As the current collector, a metal or alloy such as aluminum, titanium, or stainless steel, formed into a foil, a punched foil, a mesh, or the like, can be used.

The positive electrode material used for forming the positive electrode material layer is not particularly limited. Examples of the positive electrode material include metal compounds (such as metal oxides and metal sulfides) capable of doping or intercalating lithium ions, and conductive polymer materials. More specifically, the examples of the positive electrode material include lithium cobalt oxide (LiCoO₂), lithium nickel oxide (LiNiO₂), lithium manganese oxide (LiMnO₂), complex oxides thereof (LiNiₓMn_{y}Co_{z}O₂, x + y + z = 1), complex oxides containing an additive element M' (LiNiₐMn_{b}Co_{c}M'_{d}O₂, a + b + c + d = 1, M' : Al, Mg, Ti, Zr, or Ge), spinel-type lithium manganese oxide (LiMn₂O₄), lithium vanadium compounds, V₂O₅, V₆O₁₃, VO₂, MnO₂, TiO₂, MoV₂O₈, TiS₂, V₂S₅, VS₂, MoS₂, MoS₃, Cr₃O₈, Cr₂O₅, metal compounds such as olivine-type LiMPO₄ (M: Co, Ni, Mn, or Fe), conductive polymers such as polyacetylene, polyaniline, polypyrrole, polythiophene, and polyacene, and porous carbon. The positive electrode materials may be used alone as a single type or in combination of two or more types.

The electrolyte is not particularly limited, and for example, an organic electrolyte in which a lithium salt as an electrolyte is dissolved in a non-aqueous solvent can be used.

Examples of the lithium salt include LiClO₄, LiPF₆, LiAsF₆, LiBF₄, and LiSO₃CF₃. The lithium salts may be used alone as a single type or in combination of two or more types.

Examples of the non-aqueous solvent include ethylene carbonate, fluoroethylene carbonate, chloroethylene carbonate, propylene carbonate, butylene carbonate, vinylene carbonate, cyclopentanone, cyclohexylbenzene, sulfolane, propanesultone, 3-methylsulfolane, 2,4-dimethylsulfolane, 3-methyl-1,3-oxazolidin-2-one, γ-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, ethyl acetate, trimethyl phosphate, and triethyl phosphate. The non-aqueous solvents may be used alone as a single type or in combination of two or more types.

The states of the positive electrode and the negative electrode in the lithium-ion secondary battery are not particularly limited. For example, the positive electrode and the negative electrode, and, if necessary, a separator disposed between the positive electrode and the negative electrode, may be wound into a spiral shape, or may be stacked in a flat plate shape.

The separator is not particularly limited, and for example, a resin nonwoven fabric, a cloth, a microporous film, or a combination thereof can be used. Examples of the resin include resins mainly composed of polyolefins such as polyethylene and polypropylene. In terms of the structure of the lithium-ion secondary battery, when the positive electrode and the negative electrode do not come into contact with each other, the separator may not be used.

The shape of the lithium-ion secondary battery is not particularly limited. Examples thereof include a laminate battery, a paper battery, a button battery, a coin battery, a stacked battery, a cylindrical battery, and a prismatic battery.

The lithium-ion secondary battery of the present disclosure is suitably used as a large-capacity lithium-ion secondary battery for applications such as electric vehicles, power tools, and power storage devices.

### [Examples]

Hereinafter, the present disclosure will be described in detail with reference to Examples, but the present disclosure is not limited to these Examples.

### [Example 1]

As a raw material of the graphite particles, petroleum-derived green coke (semi-needle coke) was used.

The green coke was coarsely pulverized with a hammer mill. The coarse pulverized product was sieved using a sieve with an opening of 3 mm, and the fraction that passed through the sieve was further sieved using a sieve with an opening of 1 mm to collect granules having a particle diameter of 1 mm to 3 mm.

The obtained coke particles were pulverized and classified using a roller mill. Next, the coke particles were subjected to a spheroidization treatment for 50 minutes under conditions of a peripheral speed of 75 m/s. Thus, the coke particles shown in Table 1 were obtained. Then, the particle size distribution of the coke particles on a volume basis was determined using a laser diffraction particle size distribution measuring apparatus (SALD3100, Shimadzu Corporation). The results are shown in Table 1.

65 parts by mass of the obtained coke particles (90 mass% of fixed carbon), 7 parts by mass of starch (20 mass% of fixed carbon), and 28 parts by mass of water were kneaded using a kneader to obtain a mixture.

Next, the obtained mixture was molded into a molded body at room temperature by uniaxial pressing so as to have a density of 1.3 g/cm³ or less. Next, the obtained molded body was subjected to a heat treatment at 850°C for 8 hours in a nitrogen atmosphere. Thereafter, graphitization was performed at 3,000°C for 30 hours. Thereafter, the obtained particles were sieved with a 280-mesh screen to obtain graphite particles as the negative electrode material. Using a laser diffraction particle size distribution measuring apparatus (SALD3100, Shimadzu Corporation), the particle size distribution of the graphite particles on a volume basis was determined, and D10 was 16.0 µm, D50 was 23.6 µm, and D90 was 34.7 µm.

### [Examples 2 and 3]

Coke particles were obtained in the same manner as in Example 1, except that the spheroidization treatment time for the coke particles was changed to 35 minutes or 15 minutes. The particle size distribution of the coke particles on a volume basis was determined in the same manner as in Example 1. The results are shown in Table 1.

Furthermore, graphite particles as the negative electrode material were obtained in the same manner as in Example 1. The particle size distribution of the graphite particles on a volume basis was determined in the same manner as in Example 1. The results are shown in Table 2.

### [Comparative Example 1]

Coke particles were obtained in the same manner as in Example 1, except that no spheroidization treatment was performed on the coke particles. The particle size distribution of the coke particles on a volume basis was determined in the same manner as in Example 1. The results are shown in Table 1.

Furthermore, graphite particles as the negative electrode material were obtained in the same manner as in Example 1. The particle size distribution of the graphite particles on a volume basis was determined in the same manner as in Example 1. The results are shown in Table 2.

Using the coke particles and negative electrode materials obtained in each of the Examples and Comparative Examples, the following physical properties were measured and evaluated. The results are shown in Table 1 and Table 2.

### (Particle size distribution)

Using a laser diffraction particle size distribution measuring apparatus (SALD3100, Shimadzu Corporation), the particle size distribution of the coke or graphite particles on a volume basis was determined. Specifically, D10, D50, D90, and D90/D10 were determined.

### (Circularity)

The circularity of the coke or the negative electrode material was measured using a wet flow particle diameter and shape analyzer (FPIA-3000, manufactured by Malvern Panalytical). The circularity at a cumulative 50% on a number basis (so-called average circularity) was defined as the circularity.

### (Specific surface area)

Coke or negative electrode material was filled into a measurement cell, and the sample obtained by performing a heat pretreatment at 200°C under vacuum degassing was subjected to nitrogen gas adsorption using a gas adsorption apparatus (ASAP2010, manufactured by Shimadzu Corporation). BET analysis was performed by the five-point method on the obtained sample to determine the specific surface area (SSA in the table).

### (Tap density)

100 cm³ of a sample powder of coke or the negative electrode material was charged into a graduated flat-bottom test tube having a capacity of 150 cm³ (KRS-406, manufactured by Kuramochi Kagaku Kikai Seisakusho K.K.), and the graduated flat-bottom test tube was sealed with a stopper. Before dropping the graduated flat-bottom test tube sealed with a stopper, the 0-tap density (TAP0) was determined from the mass and volume of the sample powder. In addition, the 30-tap density (TAP30) and the 250-tap density (TAP250) were determined from the mass and volume of the sample powder after dropping the graduated flat-bottom test tube 30 times or 250 times from a height of 5 cm.

### (Compression ratio)

The compression ratio was determined from TAP0 and TAP250 obtained as described above, using the following equation. $Compression ratio = \left(TAP250-TAP0\right) / TAP 250$

### (Compressive load)

3.0 g of the negative electrode material was filled into a die having a diameter of 15 mm and compressed at a constant speed of 10 mm/min using an autograph (manufactured by Shimadzu Corporation). During the compression, the distance from the bottom surface of the negative electrode material to the pressing surface was measured, and the density under pressure was calculated from the volume of the negative electrode material obtained by multiplying this distance by the bottom area of the die. The press hammer of the autograph was equipped with a load cell, and the applied pressure (kN/cm²) when the predetermined density of 1.7 g/cm³ was reached was defined as the compressive load.

### (Springback ratio)

Using an autograph (manufactured by Shimadzu Corporation), pressing was performed by the above method with a reference density of 1.7 g/cm³, and the springback ratio was determined by the following equation. 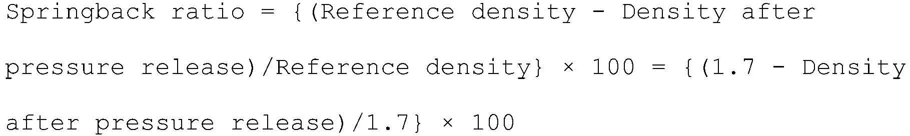 Springback ratio = {(Reference density - Density after pressure release)/Reference density} × 100 = {(1.7 - Density after pressure release)/1.7} × 100

### (Oil absorption)

The oil absorption of coke or the negative electrode material was measured by a method described in JIS K 6217-4:2017 "Carbon black for rubber industry -Fundamental characteristics- Part 4: Determination of oil absorption number (OAN)", in which linseed oil (for example, manufactured by KANTO CHEMICAL CO., INC.) was used as a reagent liquid instead of dibutyl phthalate (DBP).

Specifically, linseed oil was titrated to the target powder with a constant-rate burette, and a change in viscosity characteristics was measured with a torque detector. The oil absorption (mL/100 g) was defined as the amount of linseed oil added per unit mass of the target powder corresponding to a torque of 70% of a maximum torque generated (the value shown in Table 1 or Table 2). As the measuring instrument, an oil absorption measuring apparatus (product name: S-500) manufactured by Asahisouken Corporation was used.

### (Degree of graphitization)

10 parts by mass or 20 parts by mass of silicon powder (for example, SRM 640f, National Institute of Standards and Technology (NIST), USA) was mixed with the negative electrode material for 5 minutes using an agate mortar, and the obtained mixture was placed in a sample holder for X-ray diffraction measurement. Using an X-ray diffractometer (for example, X-ray diffractometer X-RAY DIFFRACTIOMETER MultiFlex, manufactured by Rigaku Corporation), X-ray diffraction measurement (2θ = 25° to 29°) was performed with CuKα radiation, and the diffraction angle corresponding to the (002) plane of graphite and the diffraction angle corresponding to the (111) plane of silicon were measured.

By using the theoretical diffraction angle of Si (2θ = 28.441°) to correct the observed diffraction angles of silicon and graphite, the correct diffraction angle of graphite was determined.

Using Bragg's equation (2dsinθ = nλ), the interplanar spacing of the d(002) plane (Å) of the negative electrode material was calculated, and the degree of graphitization was determined by the following equation. 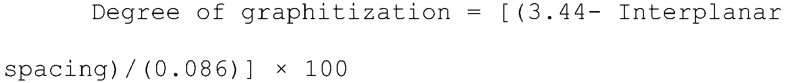 Degree of graphitization = [(3.44- Interplanar spacing)/(0.086)] × 100

### (Crystallite size)

In the same manner as described above, X-ray diffraction measurement (75.5° to 78.5°) was performed using CuKα radiation with an X-ray diffractometer (for example, X-ray diffractometer X-RAY DIFFRACTIOMETER MultiFlex, manufactured by Rigaku Corporation). Peak fitting was performed on the diffraction line corresponding to the (110) plane of graphite and the diffraction line corresponding to the (331) plane of silicon obtained, and the peaks were separated into Kα1 and Kα2 diffraction lines. Thereafter, the full width at half maximum of the Kα1 diffraction line of graphite was corrected by the full width at half maximum of the Kα1 diffraction line of silicon, and the crystallite size Lc (nm) was determined using Scherrer's equation (crystallite size = K·β·cosθ).
K: Shape factor (generally 0.9)
λ: X-ray wavelength
β: Full width at half maximum of peak (in radians)
θ: Diffraction angle of peak (in radians)

### (Average interplanar spacing)

10 parts by mass or 20 parts by mass of silicon powder (for example, SRM 640f, National Institute of Standards and Technology (NIST), USA) was mixed with the negative electrode material for 5 minutes using an agate mortar, and the obtained mixture was placed in a sample holder for X-ray diffraction measurement. Using an X-ray diffractometer (for example, X-ray diffractometer X-RAY DIFFRACTIOMETER MultiFlex, manufactured by Rigaku Corporation), X-ray diffraction measurement (2θ = 25° to 29°) was performed with CuKα radiation, and the diffraction angle corresponding to the (002) plane of graphite and the diffraction angle corresponding to the (111) plane of silicon were measured. By using the theoretical diffraction angle of Si (2θ = 28.441°) to correct the observed diffraction angles of silicon and graphite, the correct diffraction angle of graphite was determined.

Measurement was performed under the following conditions, and the average interplanar spacing (d₀₀₂) of the negative electrode material was calculated using Bragg's equation.
Radiation source: CuKα radiation (wavelength = 0.15418 nm)
Output: 40 kV, 20 mA
Sampling width: 0.010°
Scanning range: 10° to 35°
Scanning speed: 0.5°/min
Bragg's equation: 2dsinθ = nλ

Here, d represents a length of one period, θ represents a diffraction angle, n represents an order of reflection, and λ represents an X-ray wavelength.

### (Calculation of values from crystallite size and average interplanar spacing)

As described above, the average interplanar spacing (d₀₀₂) and the crystallite size of the graphite particles measured were defined as x(Å) and y(nm), respectively, and the values were substituted into 0.01y + 76.19x.

### (Electrode orientation)

A negative electrode for a lithium-ion secondary battery was produced as follows, and electrode orientation was evaluated under the conditions described below.

### -Production of negative electrode for lithium-ion secondary battery-

Graphite particles (97.6 parts by mass), carboxymethyl cellulose (CMC) (1.2 parts by mass), and styrene-butadiene rubber (SBR) (1.2 parts by mass) were kneaded to prepare a negative electrode material composition. The negative electrode material composition was applied to a glossy surface of an electrolytic copper foil so that the coating amount was 10 mg/cm², preliminarily dried at 90°C for 2 hours, and then adjusted by roll pressing so that the electrode density became the value shown in Table 3. Thereafter, a curing treatment was performed by drying at 120°C for 4 hours under a vacuum atmosphere, thereby forming a negative electrode material layer on the electrolytic copper foil to obtain a negative electrode for a lithium-ion secondary battery.

### -Evaluation of electrode orientation-

The obtained negative electrode for a lithium-ion secondary battery was formed into a strip-shaped sheet having a width of 5 cm and an area of 600 cm², and the resulting molded body was pressed with a roll-type press machine under a hydraulic pressure of 4 t. The line pressure at this time was 4 t/5 cm = 0.8 t/cm. The pressed negative electrode was placed in a cell for X-ray diffraction measurement, and an X-ray diffraction pattern was measured using an X-ray diffractometer (X-ray diffractometer X-RAY DIFFRACTIOMETER MultiFlex, manufactured by Rigaku Corporation) with CuKα radiation under the conditions of a scanning speed of 0.25°/min, a tube voltage of 40 kV, a tube current of 30 mA, a divergence slit of 1°, a scattering slit of 1°, and a receiving slit of 0.3 mm (2θ = 25.5° to 27.5°, 76.5° to 78.5°). The ratio of the peak intensity of the obtained 002 diffraction line (I₀₀₂) to the peak intensity of the 110 diffraction line (I₁₁₀), that is, I₀₀₂/I₁₁₀ (002/110 in Table 3), was determined, and this value was defined as the electrode orientation.

### (Adhesion evaluation)

A negative electrode material composition was prepared using the obtained negative electrode material, the negative electrode material composition was applied to a rolled copper foil to form a negative electrode material layer, and adhesion between the rolled copper foil and the negative electrode material layer was evaluated. A negative electrode material composition was prepared from the obtained negative electrode material in the same manner as described above. Next, the negative electrode material composition was applied to a rolled copper foil having a thickness of 20 µm using a comma coater, in which the clearance was adjusted so that the coating amount per unit area was 35.0 mg/cm², thereby forming a negative electrode material layer. The rolled copper foil on which the negative electrode material layer was formed was punched into a size of 1.0 cm × 5.0 cm to obtain a copper foil with a negative electrode material layer for adhesion evaluation.

Next, after attaching a double-sided tape G9000 manufactured by Dexerials Corporation onto a base movable in the lateral direction, the copper foil side of the copper foil with the negative electrode material layer was attached to the opposite surface of the side of the double-sided tape that was affixed to the base. Then, an adhesive tape (18 mm wide) manufactured by 3M was attached to the negative electrode material layer side of the copper foil with the negative electrode material layer so that an end of the adhesive tape was exposed, thereby preparing a sample for evaluation of peeling of the negative electrode material layer.

For the prepared sample for evaluation of peeling of the negative electrode material layer, the exposed end of the adhesive tape was gripped with a peeling strength tester (Push-Pull Scale & Digital Force Gauge, manufactured by IMADA Co., Ltd.), and the adhesive tape was pulled upward at a speed of 20 mm/min while moving the base laterally at a speed of 20 mm/min, thereby peeling the negative electrode material layer attached to the adhesive tape from the copper foil attached to the double-sided tape, and the peel strength of the negative electrode material layer at that time was measured.

### (SOC-Li (Li deposition resistance))

A lithium-ion secondary battery was manufactured using the negative electrode for a lithium-ion secondary battery obtained above, and the Li deposition resistance was evaluated as follows.

### -Manufacture of lithium-ion secondary battery-

A coin cell, which is a lithium-ion secondary battery, was manufactured using the negative electrode for a lithium-ion secondary battery obtained above, metallic lithium as a counter electrode, a mixed solution of ethylene carbonate/ethyl methyl carbonate (volume ratio of 3:7) containing 1 M LiPF₆ and vinylene carbonate (VC) (1.0 mass%) as an electrolyte, a polyethylene microporous membrane having a thickness of 25 µm as a separator, and a copper plate having a thickness of 250 µm as a spacer.

### -Evaluation of Li deposition resistance-

The manufactured lithium-ion secondary battery was placed in a constant-temperature chamber set at 25°C, and from the first to the third cycle, constant-current charging was performed at a current value of 0.1 C to a voltage of 0.005 V (V vs. Li/Li⁺), and then, constant-voltage charging was performed at 0.005 V until the current value reached 0.05 C. Next, after resting for 30 minutes, constant-current discharging was performed at a current value of 0.2 C to a voltage of 1.5 V (V vs. Li/Li⁺). The discharge capacity in the third cycle was defined as 1 C in the Li deposition test. Charging in the fourth cycle was performed at a current density of 3 C, corresponding to charging the discharge capacity of the third cycle within 20 minutes, and the termination condition was set to a 1 C capacity limit. In the differential profile of the charging curve obtained in the fourth cycle (dV/dQ, where V is voltage and Q is electric capacity), the first inflection point was defined as the Li deposition starting point, the capacity at this point was expressed as a percentage relative to the discharge capacity in the third cycle (or the charging capacity in the fourth cycle set to be the same capacity), and the Li deposition resistance was evaluated. The results are shown in Table 3. The larger the percentage value, the better the Li deposition resistance.

### (Measurement of direct current resistance (DCR))

The direct current resistance (DCR) of the lithium-ion secondary battery was measured to determine the input characteristics of the battery. The details are as follows.

Using the negative electrode for a lithium-ion secondary battery obtained as described above, a single-layer laminated full cell (lithium-ion secondary battery) was manufactured by using a composite electrode containing 94 parts by mass of lithium nickel cobalt manganese oxide (LiNi_{0.33}Mn_{0.33}Co_{0.33}O₂), 3 parts by mass of carbon black, and 3 parts by mass of polyvinylidene fluoride as a positive electrode, a mixed solution of ethylene carbonate/diethyl carbonate (volume ratio of 3:7) containing 1 M LiPF₆ and vinylene carbonate (VC) (1.0 mass%) as an electrolyte, and a polyethylene microporous membrane having a thickness of 25 µm as a separator.

The lithium-ion secondary battery (single-layer laminated full cell) was placed in a thermostatic chamber set at 25°C, and charged and discharged for three cycles under the following conditions: charging: CC/CV 0.2 C 4.2 V 0.02 C cut, and discharging: CC 0.2 C 2.5 V cut.

Next, constant current charging was performed at a current value of 0.2 C up to an SOC of 50%.

In addition, the lithium-ion secondary battery was placed in a thermostatic chamber set at 25°C, constant current charging was performed for 10 seconds each under the conditions of 1 C, 2 C, and 3 C, the voltage drop (ΔV) at each constant current was measured, and the direct current resistance (DCR) was measured using the following equation. 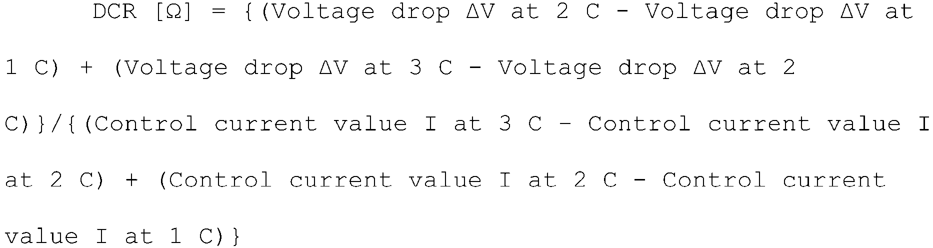 DCR [Ω] = {(Voltage drop ΔV at 2 C - Voltage drop ΔV at 1 C) + (Voltage drop ΔV at 3 C - Voltage drop ΔV at 2 C)}/{ (Control current value I at 3 C - Control current value I at 2 C) + (Control current value I at 2 C - Control current value I at 1 C)}

A stacked cell for expansion measurement was manufactured under the following conditions.

The negative electrode composition was graphite/conductive additive (carbon black)/CMC/SBR = 96.0/1.0/1.5/1.5 (mass ratio), the coating amount was 10.0 mg/cm², and the electrode density was 1.60 g/cm³. The positive electrode composition was NMC811/conductive additive (carbon black)/PVdF = 96.5/1.5/2.0 (mass ratio), the coating amount was 14.1 mg/cm², and the electrode density was 3.2 g/cm³. A PP single layer was used as the separator, and as the electrolyte, a solution of 1 mol/L LiPF₆ in EC (ethyl carbonate)/DEC (diethyl carbonate) (= 3/7) containing 1.0 mass% of VC (vinylene carbonate) was used. The capacity balance between the positive and negative electrodes was designed to be 1.07 to 1.13, and the cell was manufactured by alternately stacking five negative electrodes (double-sided coated) and four positive electrodes (double-sided coated), with an electrolyte amount of 2,100 µL.

Pre-charging (45°C, CC = 0.03 C, CV = 3.4 V, 0.01 C cutoff → degassing 1) was performed on the manufactured stacked cell, an aging process (first charging: 45°C, CC = 0.1 C, CV = 4.2 V, 0.02 C cutoff, held for 12 h → degassing 2; first discharging: 25°C, CC = 0.1 C, EV = 2.8 V; second charging: 25°C, CC = 0.2 C, CV = 4.2 V, 0.05 C cutoff; second discharging: 25°C, CC = 0.2 C, EV = 2.8 V, two cycles) was performed, and then expansion measurement was performed.

For the expansion measurement, an LG100-0125 manufactured by Mitutoyo Corporation was used as a displacement gauge, the sampling interval of displacement was set to 10 sec, and the measurement was performed with a weight placed on the stacked cell so that the load was about 0.07 kg/cm² .

The charge/discharge conditions for the expansion measurement were set as follows: 0.2 C CC discharge to 2.5 V → rest for 15 min → 0.2 C CC charge to 4.25 V → rest for 15 min → 0.2 C CC discharge to 2.5 V → rest for 15 min.

### (SOC swelling)

SOC swelling was determined by dividing a value obtained by subtracting the displacement at the discharged state @ 2.5 V from the displacement at the charged state @ 4.25 V at the 20th or 70th cycle by the assumed effective thickness of the composite layer (the total thickness of only the negative electrode layers facing the positive electrode).

### (Degradation swelling)

Degradation swelling was determined by dividing the displacement at the discharged state @ 2.5 V at the 20th or 70th cycle by the assumed effective thickness of the composite layer (the total thickness of only the negative electrode layers facing the positive electrode).

**[Table 1]**

| | Spheroidization treatment time [min] | D10 [µm] | D50 [µm] | D90 [µm] | D90/D10 [-] | Circularity [%] | SSA [m²/g] | TAP0 [g/cm³] | TAP30 [g/cm³] | TAP250 [g/cm³] | Compression ratio (TAP250-TAP0/TAP250) | Oil absorption [mL/100 g] | Max torque [mN] |
|---|---|---|---|---|---|---|---|---|---|---|---|---|---|
| Example 1 | 50 | 16.1 | 22.5 | 32.4 | 2.0 | 94.9 | 0.66 | 0.39 | 1.05 | 1.21 | 0.26 | 24.4 | 0.47 |
| Example 2 | 35 | 13.6 | 21.4 | 33.9 | 2.5 | 94.8 | 0.63 | 0.88 | 1.04 | 1.21 | 0.28 | 23.6 | 0.42 |
| Example 3 | 15 | 9.6 | 17.8 | 33.4 | 3.5 | 92.9 | 0.61 | 0.81 | 0.96 | 1.20 | 0.32 | 24.3 | 0.55 |
| Comparative Example 1 | 0 | 8.0 | 17.4 | 35.7 | 4.4 | 90.4 | 0.74 | 0.64 | 0.80 | 1.06 | 0.40 | 48.6 | 0.67 |

**[Table 2]**

| | D10 [µm] | D50 [µm] | D90 [µm] | D90/D10 [-] | Circularity [%] | SSA [m²/g] | TAP0 [g/cm³] | TAP30 [g/cm³] | TAP250 [g/cm³] | Compression ratio (TAP250-TAP0/TAP250 ) | Compressive load [kN/cm²] | Springback ratio [%] | Oil absorption [mL/100 g] | Max torque [mN] | Degree of graphitizatior [%] |
|---|---|---|---|---|---|---|---|---|---|---|---|---|---|---|---|
| Example 1 | 16.0 | 23.6 | 34.7 | 2.2 | 92.4 | 1.98 | 0.74 | 1.04 | 1.14 | 0.35 | 4.32 | 22.4 | 31.4 | 0.49 | 92.6 |
| Example 2 | 14.4 | 22.6 | 35.2 | 2.5 | 91.5 | 1.91 | 0.71 | 0.88 | 1.16 | 0.39 | 3.79 | 21.6 | 30.9 | 0.49 | 92.5 |
| Example 3 | 9.8 | 20.3 | 37.5 | 3.8 | 91.0 | 1.75 | 0.67 | 0.98 | 1.16 | 0.43 | 2.82 | 18.2 | 34.0 | 0.48 | 93.1 |
| Comporative Example 1 | 9.9 | 19.19 | 35.5 | 3.6 | 90.6 | 1.82 | 0.68 | 1.00 | 1.18 | 0.43 | 2.23 | 18.3 | 37.0 | 0.49 | 93.9 |

**[Table 3]**

| | Average interplanar spacing d₀₀₂ [Å] | Crystallite size Lc [nm] | Calculated value | Electrode orientation 002/110[-] | Electrode density | Peel strength [mN/mm] | Li deposition resistance [%] | Initial DCR [Q] | SOC swelling @20 cyc. [%] | Degradation swelling @20 cyc. [%] | SOC swelling @70 cyc. [%] | Degradation swelling @70 cyc. [%] |
|---|---|---|---|---|---|---|---|---|---|---|---|---|
| Example 1 | 3.360 | 43.8 | 256.47 | 276.7 | 1.52 | 39.8 | 46.7 | 1.61 | 3.2 | 0.5 | | |
| Example 2 | 3.360 | 49.2 | 256.53 | 304.9 | 1.53 | 36.9 | 44.0 | 1.64 | 2.7 | 0.5 | 2.6 | 0.8 |
| Example 3 | 3.360 | 70.4 | 256.70 | 341.0 | 1.61 | 37.5 | 44.0 | 1.63 | 2.8 | 0.9 | 2.7 | 15 |
| Comparative Example 1 | 3.359 | 81.9 | 256.76 | 451.6 | 1.62 | 32.3 | 37.0 | 1.77 | 3.4 | 1.1 | 3.2 | 1.9 |

As shown in Tabel 3, in Examples 1 to 3, when the average interplanar spacing (d₀₀₂₎ and the crystallite size of the graphite particles were defined as X(Ⓐ) and y(nm), respectively, 0.01y + 76.19x was 256.75 or less in all cases. On the other hand, in Comparative Example 1, 0.01y + 76.19x was greater than 256.75.

In Table 3, in each of Examples, a lithium-ion secondary battery having excellent input/output characteristics and adhesion between the negative electrode and the current collector was able to be produced.

Furthermore, each of the Examples exhibited excellent Li deposition resistance compared with Comparative Example 1.

In Examples 1 to 3, SOC swelling and degradation swelling were suppressed as compared with Comparative Example 1.

All documents, patent applications, and technical standards described in the present specification are incorporated herein by reference to the same extent as if each individual document, patent application, and technical standard were specifically and individually indicated to be incorporated by reference.

## Claims

1. A negative electrode material for a lithium-ion secondary battery, which is graphite particles satisfying the following Formula (1): $0.01 y + 76.19 x \leq 256.75$ (1) in Formula (1), x is an average interplanar spacing (d₀₀₂, unit: Å) of the graphite particles as determined by an X-ray diffraction method, and y is a crystallite size Lc (nm) of the graphite particles.

2. The negative electrode material for a lithium-ion secondary battery according to claim 1, wherein the graphite particles have a compressive load of 2.3 kN/cm² or more, the compressive load being a magnitude of pressure required to compress the graphite particles to a density of 1.7 g/cm³.

3. The negative electrode material for a lithium-ion secondary battery according to claim 1 or 2, wherein the graphite particles include artificial graphite particles, the artificial graphite particles are particles obtained by graphitizing a mixture containing a graphitizable aggregate and a graphitizable binder, and the binder contains a polymer compound having water solubility or water absorbency.

4. The negative electrode material for a lithium-ion secondary battery according to any one of claims 1 to 3, wherein a circularity of the graphite particles is 90.7% or more.

5. The negative electrode material for a lithium-ion secondary battery according to any one of claims 1 to 4, wherein an oil absorption of the graphite particles is 45 mL/100 g or less.

6. The negative electrode material for a lithium-ion secondary battery according to any one of claims 1 to 5, wherein a 0-tap density of the graphite particles is 0.65 g/cm³ to 0.80 g/cm³.

7. The negative electrode material for a lithium-ion secondary battery according to any one of claims 1 to 6, wherein a 30-tap density of the graphite particles is 0.86 g/cm³ to 1.10 g/cm³.

8. The negative electrode material for a lithium-ion secondary battery according to any one of claims 1 to 7, wherein a 250-tap density of the graphite particles is 1.05 g/cm³ to 1.25 g/cm³.

9. The negative electrode material for a lithium-ion secondary battery according to any one of claims 1 to 8, wherein a specific surface area of the graphite particles determined by nitrogen adsorption measurement at 77 K is 0.2 m²/g to 6.0 m²/g.

10. A negative electrode for a lithium-ion secondary battery, comprising a negative electrode material layer including the negative electrode material for a lithium-ion secondary battery according to any one of claims 1 to 9, and a current collector.

11. A lithium-ion secondary battery, comprising the negative electrode for a lithium-ion secondary battery according to claim 10, a positive electrode, and an electrolyte.

12. A method for producing a negative electrode material for a lithium-ion secondary battery, the method being a method for producing the negative electrode material for a lithium-ion secondary battery according to any one of claims 1 to 9, the method comprising:
(a) a step of obtaining a mixture containing a graphitizable aggregate and a graphitizable binder containing a polymer compound having water solubility or water absorbency;
(b) a step of molding the mixture to obtain a molded body;
(c) a step of graphitizing the molded body to obtain a graphitized product; and
(d) a step of pulverizing the graphitized product to obtain a pulverized product.

13. The method for producing a negative electrode material for a lithium-ion secondary battery according to claim 12, further comprising, prior to the step (a), (e) a step of spheroidizing the graphitizable aggregate.
